# EUROPÄISCHE PATENTSCHRIFT

(11) **EP 0 717 289 B1**
(45) Veröffentlichungstag und Bekanntmachung des Hinweises auf die Patenterteilung: **03.04.2002**
(21) Anmeldenummer: 95810755.9
(22) Anmeldetag: 04.12.1995
(51) Int. Cl.: G01S 13/34, E03D 5/10

(54) **Vorrichtung mit einer Radarsonde und einer Steuereinheit**
Devices with a radar sensor and a control unit
Equipements avec un capteur radar et une unité de commande

(30) Priorität: 14.12.1994 CH 378494
(43) Veröffentlichungstag der Anmeldung: 19.06.1996
(73) Patentinhaber: GEBERIT TECHNIK AG, 8645 Jona (CH)
(72) Erfinder: Mauerhofer, Alex, CH-7324 Vilters (CH)
(74) Vertreter: Schick, Carl

(56) Entgegenhaltungen:
- EP-A- 0 353 183
- DE-A- 3 008 025
- DE-A- 3 210 985
- DE-A- 4 027 972
- US-A- 4 981 158
- US-A- 5 268 692

## Beschreibung

Die vorliegende Erfindung betrifft eine Vorrichtung mit einer Radarsonde und einer Steuereinheit gemäss dem Patentanspruch 1.

Aus der EP-A1-0 353 183 ist beispielsweise eine Radarsonde zur selbsttätigen Einzelsteuerung von Sanitärarmaturen bekannt, die auf Bewegungen von Personen anspricht und richtungserkennend ist. Bei hohen Anforderungen an den Spülkomfort und die zuverlässige Arbeitsweise von Sanitärarmaturen vermögen solche Radarsonden nicht zu befriedigen, da sie nicht in der Lage sind, ein eindeutiges Anwesenheitssignal für einen Benutzer der betreffenden Sanitärarmatur zu erzeugen. Nachteilig ist zudem die Tatsache, dass solche Radarsonden in technisch aufwendiger Weise an die Transmissions- und Reflexionseigenschaften der betreffenden Sanitärarmatur angepasst werden müssen, was in vielen Fällen die diesbezüglichen Kenntnisse und Fähigkeiten der installierenden Sanitärmonteure überfordert.

Es ist daher Aufgabe der vorliegenden Erfindung, eine Vorrichtung mit einer Radarsonde und einer Steuereinheit zu schaffen, die eine zuverlässige Arbeitsweise der Sanitärarmatur gewährleistet und zugleich wenig aufwendig ist.

Ein Vorteil der erfindungsgemässen Vorrichtung besteht darin, dass sie einen hohen Spülkomfort gewährleistet und zugleich ohne jegliche Anpassung problemlos an allen handelsüblichen Sanitärarmaturen installiert werden kann.

Erfindungsgemäss wird diese Aufgabe durch eine Vorrichtung mit einer Radarsonde und einer Steuereinheit nach Patentanspruch 1 gelöst.

Vorteilhafte Ausführungen der Erfindung sind in den abhängigen Ansprüchen angegeben.

Die Erfindung wird nun nachfolgend beispielsweise anhand einer Zeichnung näher erläutert. Es zeigt:
- Fig. 1: eine schematische Darstellung zur Erläuterung der praktischen Arbeitsweise einer Radarsonde nach der Erfindung,
- Fig. 2: das Blockschaltbild einer Radarsonde zur Steuerung von Sanitärarmaturen nach der Erfindung,
- Fig. 3: eine schematische Darstellung eines Moduls mit einer planaren Sende und Empfangsantenne,
- Fig. 4: eine schematische Darstellung eines dreieckförmig modulierten Radarsignals mit stationärem Ziel,
- Fig. 5: eine schematische Darstellung der Differenz zwischen Sende- und Empfangsfrequenz mit stationärem Ziel,
- Fig. 6: eine schematische Darstellung eines dreieckförmig modulierten Radarsignals mit bewegtem Ziel, und
- Fig. 7: eine schematische Darstellung der Differenz zwischen Sende- und Empfangsfrequenz mit bewegtem Ziel.

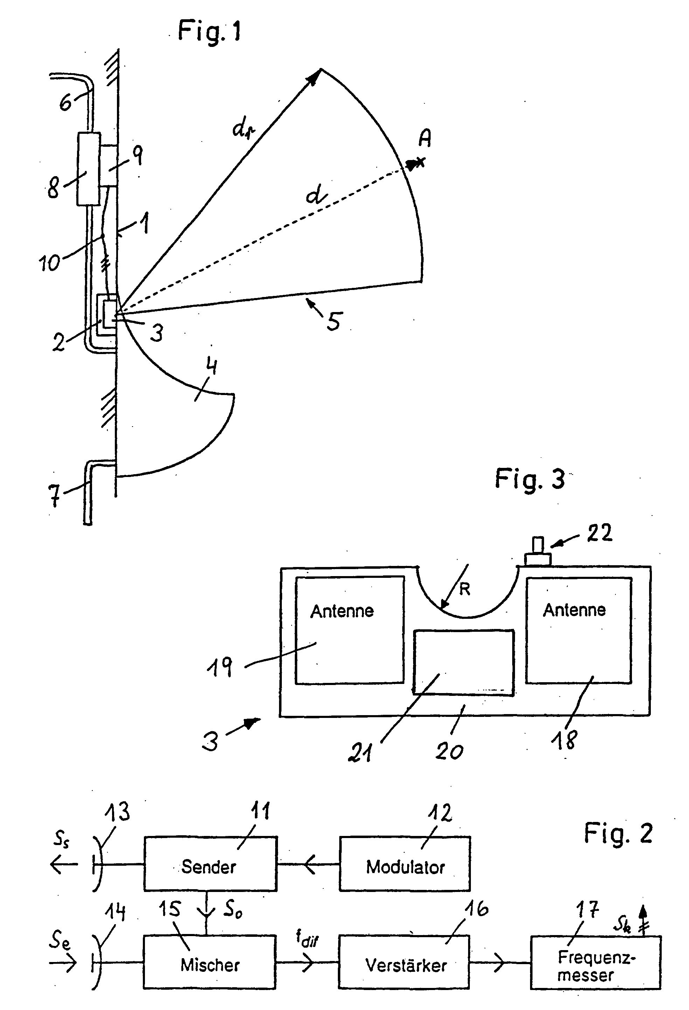

In Figur 1 ist schematisch eine Wand 1 eines Nassraumes dargestellt, die eine Ausnehmung 2 aufweist, in der eine relativ kleine Radarsonde 3 nach der Erfindung untergebracht ist. Die Radarsonde 3, die sich hinter dem oberen Bereich eines Sanitärbeckens, beispielsweise eines Urinalbeckens 4, befindet und daher für das Publikum unsichtbar ist, arbeitet mit einer das keramische Beckenmaterial durchdringenden elektromagnetischen Welle mit der Frequenz fₒ.

Die Antennencharakteristik 5 dieser Radarsonde 3 weist eine Keulenform auf mit einem Öffnungswinkel von beispielsweise 45° bis 50° bei einer Dämpfung von 3 dB in horizontaler und vertikaler Richtung. Die Antennenstrahlrichtung ist etwa 30° nach oben gerichtet, um für Personen kleiner oder grosser Statur zu einer möglichst grossen Zielfläche zu gelangen.

Zur Spülung ist das Becken 4 an eine Wasserleitung 6 und an eine Abflussleitung 7 angeschlossen. In der Wand befinden sich zudem eine Armatur 8 mit einem Magnetventil und eine Einheit 9 mit einer Steuervorrichtung, welche im Zusammenwirken mit der Radarsonde 3 das Becken 4 automatisch spült.

Die Einheit 9, die eine Batterie enthalten oder an das Stromnetz angeschlossen sein kann, liefert über elektrische Leitungen 10 sowohl Strom als auch Steuersignale an die Radarsonde 3. Die einen Mikroprozessor enthaltende Steuereinheit 9 steuert die Radarsonde 3 in der Weise, dass sie periodisch mit einer Wiederholungsfrequenz f_{w1} Radarimpulse der Dauer Tᵣ sendet, falls sie sich in einem passiven Überwachungszustand befindet, das heisst, wenn kein diskriminierbares oder nützliches Radarecho zurückkommt, weil sich niemand in der Nähe des Beckens 4 befindet. Für die Dauer Tᵣ können vorzugsweise Werte von 0,1 bis 10 ms und für die Frequenz f_{w1} Werte von 0,1 bis 10 Hz gewählt werden.

Sobald die Radarsonde 3 ein nützliches Radarecho bekommt, weil sich eine Person innerhalb eines durch einen Referenzabstand dᵣ (Fig. 1) definierten Nahbereichs befindet, geht die Steuerung in den aktiven Überwachungszustand über, und die Wiederholungsfrequenz wird um einen Faktor k, beispielsweise k = 2 bis 40, erhöht. Während der aktiven Überwachung wird ständig der Abstand d zwischen der Person im Punkt A und der Radarsonde 3 gemessen. Gegebenenfalls werden entsprechende Meldungen von der Radarsonde 3 über die Leitungen 10 an die Steuereinheit 9 übertragen und/oder die entsprechenden Werte vorübergehend vorzugsweise in der Steuereinheit 9 gespeichert. Wird der gemessene Abstand d kleiner als der Referenzwert dᵣ, der vorzugsweise zwischen 70 cm und 100 cm oder beispielsweise auch zwischen 50 cm und 120 cm liegen kann, so wird überprüft, ob dieses Distanzsignal während einer minimalen Zeitdauer von beispielsweise 5 bis 15 sec, der sogenannten Verweilzeit, andauernd vorhanden ist. Sobald im Anschluss an diese Verweilzeit der Abstand d nochmals grösser als der Referenzwert dᵣ ist, das heisst, wenn die Person sich wieder vom Punkt A entfernt hat, wird die Armatur 8 aktiviert, um eine Spülung des Beckens 4 zu bewirken, die beispielsweise zwischen 4 bis 10 sec dauern kann. Während dieser Zeit kann eine Unterbrechung der Überwachungen stattfinden. Nach der Spülung geht die Steuerung wieder in den passiven Überwachungszustand über.

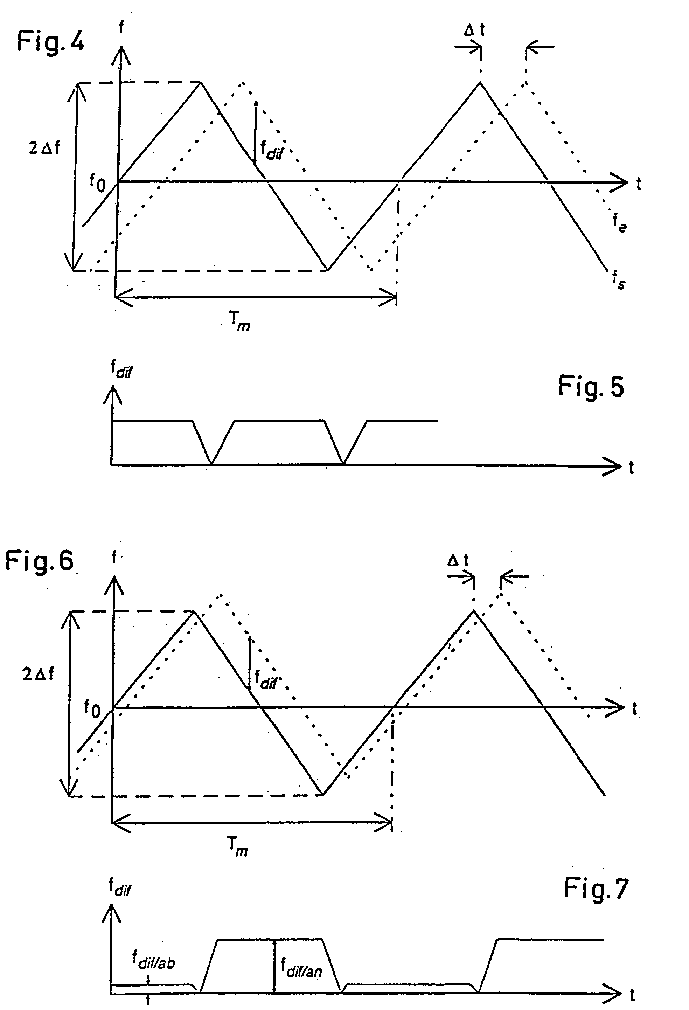

Die Radarsonde nach Figur 2 umfasst sendeseitig eine Sender 11, einen Modulator 12 und eine Sendeantenne 13 und empfangsseitig eine Empfangsantenne 14, einen Mischer 15, einen Verstärker 16 und einen Frequenzmesser 17. Der Sender 11 weist einen Sendeoszillator auf, der ein Signal Sₒ mit einer Referenzfrequenz fₒ erzeugt. Das Signal Sₒ wird durch den Modulator 12 beispielsweise zumindest angenähert dreieckförmig oder sägezahnförmig moduliert, so dass über die Antenne 13 ein frequenzmoduliertes Sendesignal Sₛ ausgestrahlt wird, das somit eine momentane Frequenz fₛ (Fig. 4) aufweist.

Nach Reflexion an einem Zielobjekt, das heisst an einer zu überwachenden Person, die sich in einem Abstand d von den Sende- und Empfangsantennen 13, 14 befindet, wird das empfangene schwache Signal Sₑ im Mischer 15 mit dem vom Sender 11 abgezweigten Signal Sₒ gemischt, um die sich durch die Laufzeit zum Zielobjekt und zurück ergebende Differenz zwischen der momentanen Frequenz fₛ des Sendesignals Sₛ und der momentanen Frequenz fₑ des empfangenen Signals Sₑ zu bilden.

Die nützlichen Radarechos werden zweckmässigerweise durch eine minimale und maximale Reichweitenbegrenzung definiert. Die minimale Reichweitenbegrenzung, beispielsweise 10 cm, sorgt für das Ausblenden von Nahbereichsechos, die vom Bekken selbst stammen, und die maximale Reichweitenbegrenzung, beispielsweise 80 cm, vermeidet die Erfassung einer gegenüberliegenden Wand und hilft bei der Ausfilterung von Echos, die durch vorbeigehende Personen ausgelöst werden.

Figur 3 zeigt ein flaches Modul für eine Radarsonde nach der Erfindung. Es sind zwei getrennte "Phased Array"-Antennen 18, 19 für den Sende- bzw. Empfangsteil vorgesehen. Die Antennen werden beispielsweise in "Mikrostrip"-Technik auf einer dielektrischen "Epoxy"-Platte 20 aufgebaut. Die Elektronik 21 wird im Zwischenraum zwischen den beiden Antennen 18, 19 angeordnet. Die Platte 20 kann einen Stecker 22 sowie eine Aussparung, beispielsweise halbkreisförmig mit einem Radius R, aufweisen, um auf diese Weise das Wassereinlaufrohr des Sanitärbeckens als Montagereferenz für die Radarsonde benützen zu können. Die "Phased-Array"-Antennen 18, 19 können mehrere, beispielsweise je vier, planare Strahlungselemente (patches) umfassen, wobei ihre Abstrahlrichtung mit Bezug auf das Lot der Antennenflächen mit einem definierten Winkel geneigt erfolgen kann.

Figur 4 zeigt den Verlauf der um die Zentrumsfrequenz fₒ des Senders 11 (Fig. 1) modulierten Sendefrequenz fₛ. Das am Ziel reflektierte Signal Sₑ trifft nach einer Laufzeit Δt = 2.d/c am Empfängereingang ein, worin c die Lichtgeschwindigkeit ist. Für die Modulationsperiode Tₘ gilt: Tₘ = 1/fₘ, wobei die Modulationsfrequenz fₘ vorzugsweise zwischen 50 und 500 kHz und der Modulationshub vorzugsweise zwischen 1 und 10 MHz liegt. Die Sendefrequenz liegt vorzugsweise im Bereich von 2,5 bis 10 GHz.

Aus Figur 5 ist ersichtlich, dass der Wert der Differenzfrequenz f_{dif} = fₛ - fₑ praktisch konstant ist, falls die Laufzeit Δt viel kleiner als die Modulationsperiode ist. Bei konstanten Sende- und Modulationsfrequenzen ist die Differenzfrequenz f_{dif} proportional zur Zieldistanz d. Die Zieldistanz d kann daher durch Messung der Differenzfrequenz f_{dif} ermittelt werden, was in der Praxis mit Hilfe des Frequenzmessers 17 erreicht werden kann, der die Funktion eines Frequenzdikriminators oder eines Bandpassfilters erfüllt, um mindestens ein Kriteriumsignal Sₖ zu liefern. Da die Differenzfrequenz f_{dif} bei den Anwendungen nach der Erfindung im Niederfrequenzbereich liegt, können dazu preiswerte Aktiv- oder Digitalfilter verwendet werden.

Die Dreieckmodulation erlaubt auch die Unterscheidung mehrerer Ziele in unterschiedlichen Entfernungen, weil dann mehrere Differenzfrequenzen entstehen, die durch Filterung voneinander getrennt werden können. Ist man nur an einem Ziel interessiert, so können auch einfacher realisierbare Modulationsfunktionen, beispielsweise die Cosinusfunktion, eingesetzt werden.

Bewegt sich ferner das Ziel mit einer Radialgeschwindigkeit auf den Sender zu, so tritt durch den Dopplereffekt ein zusätzlicher Frequenzterm f_{d} auf. Figur 6 zeigt den Verlauf der sich dabei ergebenden Sende- und Empfangsfrequenzen.

Aus Figur 7 sind die Differenzfrequenzen f_{dif/an} und f_{dif/ab} von zwei aufeinanderfolgenden halben Modulationsperioden ersichtlich. Durch Bildung der Differenz von diesen zwei Differenzfrequenzen kann die radiale Zielgeschwindigkeit ermittelt werden, und aus dem Verhältnis dieser zwei Frequenzen lässt sich auch die Bewegungsrichtung bestimmen.

Die Radarsonde nach der Erfindung arbeitet vorzugsweise im Frequenzband von 5,725 bis 5,850 GHz mit einer Bandbreite kleiner als 23,4 MHz.

Um Totalreflexionen an den Wänden des für die Radarstrahlung durchlässigen Beckens 4 zu vermeiden, können vorzugsweise die Antennen 13, 14 bzw. 18, 19 der Radarsonde 3 derart gerichtet sein, dass die Radarstrahlrichtung innerhalb des keramischen Materials einen Winkel mit dem Lot der Wandoberfläche bilden, der kleiner als 18° ist.

Vorzugsweise ist die Steuereinheit 9 ausgestaltet, um beim Vorhandensein des Kriteriumsignals die Steuerung der Radarsonde 3 von einem passiven Ueberwachungszustand mit einer ersten Wiederholungsfrequenz f_{w1} auf einen aktiven Überwachungszustand mit einer zweiten Wiederholungsfrequenz f_{w2} umzuschalten, die höher als die erste ist, oder bei welchem die Radarsonde dauernd eingeschaltet ist, wobei die erste Wiederholungsfrequenz f_{w1} im Bereich von 0,1 Hz bis 100 Hz und die zweite Wiederholungsfrequenz f_{w2} im Bereich von 10 Hz bis zur Dauereinschaltung der Radarsonde liegen kann.

## Patentansprüche

1. Vorrichtung mit einer Radarsonde und einer Steuereinheit zur Überwachung eines Raumes im Hinblick auf die Erkennung von Personen und um ein Nutzsignal zu erzeugen, **dadurch gekennzeichnet, dass** die Radarsonde (3) sendeseitig einen frequenzmodulierten Sender (11) und empfangsseitig einen an einem Mischer (15) angeschlossenen Frequenzmesser (17) aufweist, der mindestens ein Kriteriumsignal (Sₖ) liefert, wenn der Wert der momentanen Distanz (d) zwischen einer sich im Überwachungsbereich (A) aufhaltenden Person und der Radarsonde kleiner als ein vorbestimmter Referenzwert (dᵣ) ist, und dass die Steuereinheit (9) ausgestaltet ist, um das Nutzsignal in Abhängigkeit von diesem Kriteriumsignal (Sₖ) zu erzeugen.

2. Vorrichtung nach Anspruch 1, **dadurch gekennzeichnet, dass** sie eine Armatur (8) mit einem durch das Nutzsignal steuerbaren Magnetventil umfasst, um das Becken (4) einer Sanitäranlage zu spülen.

3. Vorrichtung nach Anspruch 1 oder 2, **dadurch gekennzeichnet, dass** die Steuereinheit (9) ausgestaltet ist, um beim Vorhandensein des Kriteriumsignals (Sₖ) die Steuerung der Radarsonde (3) von einem passiven Überwachungszustand mit einer ersten Wiederholungsfrequenz (f_{w1}) auf einen aktiven Überwachungszustand mit einer zweiten Wiederholungsfrequenz (f_{w2}) umzuschalten, die höher als die erste ist, oder bei welchem die Radarsonde dauernd eingeschaltet ist.

4. Vorrichtung nach Anspruch 3, **dadurch gekennzeichnet, dass** die erste Wiederholungsfrequenz (f_{w1}) im Bereich von 0,1 Hz bis 100 Hz und die zweite Wiederholungsfrequenz (f_{w2}) im Bereich von 10 Hz bis zur Dauereinschaltung der Radarsonde liegt.

5. Vorrichtung nach Anspruch 3 oder 4, **dadurch gekennzeichnet, dass** die Radarsonde (3) und die Steuereinheit (9) über elektrische Kabel (10) miteinander verbunden sind, und dass die Steuereinheit (9) ausgestaltet ist, um die Radarsonde (3) derart zu steuern, dass sie nur während Zeitspannen (Tᵣ) von kurzer Dauer im Vergleich mit der Periode der Wiederholungsfrequenz (f_{w1};f_{w2}) von einer Batterie gespeist wird.

6. Vorrichtung nach einem der Ansprüche 1 bis 5, **dadurch gekennzeichnet, dass** die Steuereinheit ausgestaltet ist, um mehrere Kriteriumsignale auszuwerten, die Informationen über Ziele in verschiedenen Entfernungen und/oder über auftretende Radialzielgeschwindigkeiten und/oder über die Bewegungsrichtung bei einer erfassten Radialzielgeschwindigkeit beinhalten.

7. Radarsonde für eine Vorrichtung nach einem der Ansprüche 1 bis 6, **dadurch gekennzeichnet, dass** sie sendeseitig einen mit einem Modulator (12) und einer Sendeantenne (13) verbundenen Sender (11) und empfangsseitig einen mit einer Empfangsantenne (14) und einem Frequenzmesser (17) verbundenen Mischer (15) aufweist, der mit einem Oszillatorsignal (Sₒ) beaufschlagt ist.

8. Radarsonde nach Anspruch 7, **dadurch gekennzeichnet, dass** Sender (11) und Modulator (12) ausgestaltet sind, um ein zumindest angenähert dreieckförmig oder sägezahnförmig frequenzmoduliertes Sendesignal (Sₛ) zu erzeugen.

9. Radarsonde nach einem der Ansprüche 7 bis 8, **dadurch gekennzeichnet, dass** der Frequenzmesser (17) ein aktives Bandpassfilter oder Digitalfilter umfasst, und/oder dass die Antennen (13,14) planare auf einer Print-Platte (20) angeordnete "Phased-Array"-Antennen (18,19) sind.

10. Verwendung einer Radarsonde nach einem der Ansprüche 7 bis 9 in einem für die Radarstrahlung durchlässigen keramischen Sanitärbecken, **dadurch gekennzeichnet, dass** die Antennen (13,14;18,19) der Radarsonde (3) derart mit Bezug auf eine Wand des keramischen Sanitärbeckens (4) gerichtet sind, dass die Radarstrahlrichtung im keramischen Material einen Winkel mit dem Lot der Wandoberfläche bilden, der kleiner als 18° ist.

## Claims

1. Device with a radar sensor and a control unit for control of a room in view of the detection of persons and for creating a wanted signal, **characterised in that** the radar sensor (3) comprises on the transmitting end a frequency modulated transmitter (11) and on the receiving end a frequency measurement means which is connected with a mixer (15) and which provides at least one criterion signal (Sₖ), if the value of the instantaneous distance (d) between a person being within the zone of surveillance (A) and the radar sensor is smaller than a predetermined reference value (dᵣ), and **in that** the control unit (9) is configured to generate the wanted signal in dependence of the criterion signal.

2. Device according to claim 1, **characterised in that** it comprises a fitting (8) with a magnetic valve to be controlled through the wanted signal to flush the bowl of a sanitary installation.

3. Device according to claim 1 or claim 2, **characterised in that** the control unit (9) is configured to switch upon presence of the criterion signal (Sₖ) the control of the radar sensor (3) from a passive monitoring condition with a first repetition frequency (f_{w1}) towards an active monitoring condition with a second repetition frequency (f_{w2}), which second frequency is higher than the first frequency, or wherein the radar sensor is constantly switched on.

4. Device according to claim 3, **characterised in that** the first repetition frequency (f_{w1}) is in the range between 0,1 Hz to 100 Hz and **in that** the second repetition frequency (f_{w2}) is in the range between 10 Hz up to be constantly switched on.

5. Device according to claim 3 or claim 4, **characterised in that** the radar sensor (3) and the control unit (9) are interconnected by electric cables (10) and **in that** the control unit (9) is configured to control the radar sensor (3) in a way that the sensor is only supplied from a battery through time periods (Tᵣ) which are short in comparison to the period of the repetition frequency (f_{w1}, f_{w2}).

6. Device according to one of claims 1 to 5, **characterised in that** the control unit is configured to evaluate a plurality of criterion signals containing information for targets in different distances and/or about appearing radial target velocities and/or about the movement direction upon a detected radial target velocity.

7. Radar sensor for a device according to one of claims 1 to 6, **characterised in that** the device comprises a transmitter (11) connected to a modulator (12) and a transmitting antenna (13) on the transmitting end and a mixer (15) connected to a receiving antenna (14) and a frequency measurement means (17) on the receiving end, which is provided with an oscillator signal (sₒ).

8. Radar sensor according to claim 7, **characterised in that** the transmitter (11) and the modulator (12) are configured to generate an at least triangular or serrated frequency modulated transmitting signal (S_{S}).

9. Radar sensor according to one of claims 7 to 8, **characterised in that** the frequency measurement means (17) comprise an active pass-band filter or digital filter and/or **in that** the antennas (13, 14) are planar phased-array antennas (18, 19) mounted on a printed circuit.

10. Use of a radar sensor according to one of claims 7 to 9 within a ceramic sanitary bowl which is permeable to radar radiation, **characterised in that** the antennas (13, 14; 18, 19) of the radar sensor (3) are oriented in view of a wall of the ceramic sanitary bowl (4) in a way that the direction of the radar radiation within the ceramic material forms an angle with the normal of the wall surface which is smaller than 18°.

## Revendications

1. Dispositif comportant une sonde radar et une unité de commande pour surveiller un espace, en rapport avec l'identification de personnes et pour la production d'un signal utile, **caractérisé en ce que** la sonde radar (3) comporte, côté émission, un émetteur modulé en fréquence (11) et, côté réception, un fréquencemètre (17) raccordé au mélangeur (15) et qui fournit au moins un signal formant critère (Sₖ) lorsque la valeur de la distance instantanée (d) entre une personne située dans la zone de surveillance (A) et la sonde radar est inférieure à une valeur de référence prédéterminée (dᵣ), et que l'unité de commande (9) est agencée de manière à produire le signal utile en fonction de ce signal formant critère (Sₖ).

2. Dispositif selom la revendication 1, **caractérisé en ce qu'**il comporte un élément de robinetterie (8) pourvu d'une soupape magnétique commandable au moyen d'un signal utile, pour réaliser le vidage de la cuvette (4) d'une installation sanitaire.

3. Dispositif selon la revendication 1 ou 2, **caractérisé en ce que** l'unité de commande (9) est agencée de manière à commuter, dans le cas de la présence du signal formant critère (Sₖ), la commande de la sonde radar (3) depuis un état de surveillance passive avec une première fréquence de répétition (f_{w1}) à un état de surveillance active avec une seconde fréquence de répétition (f_{w2}), qui est supérieure à la première fréquence de répétition, ou un état dans lequel la sonde radar est activée de façon permanente.

4. Dispositif selon la revendication 3, **caractérisé en ce que** la première fréquence de répétition (f_{w}) se situe dans la gamme comprise entre 0,1 Hz et 100 Hz, et la seconde fréquence de répétition (f_{w2}) est de l'ordre de 10 Hz jusqu'à l'activation permanente de la sonde radar.

5. Dispositif selon la revendication 3 ou 4, **caractérisé en ce que** la sonde radar (3) et l'unité de commande (9) sont reliées entre elles par l'intermédiaire d'un câble électrique (10), et que l'unité de commande (9) est agencée de manière à commander la sonde radar (3) de telle sorte qu'elle est alimentée par une batterie uniquement pendant des intervalles de temps (Tᵣ) de bref durée par rapport à la période de la fréquence de répétition (f_{w1}; f_{w2}).

6. Dispositif selon l'une des revendications 1 à 5, **caractérisé en ce que** l'unité de commande est agencée de manière à évaluer plusieurs signaux formant critères, qui contiennent des informations concernant des cibles à différentes distances et/ou concernant des vitesses radiales de cibles, qui apparaissent, et/ou concernant la direction de déplacement dans le cas où une vitesse radiale de cible est détectée.

7. Sonde radar pour un dispositif selon les revendications 1 à 6, **caractérisée en ce qu'**elle comporte, côté émission, un émetteur (11) relié à un modulateur (12) et à une antenne d'émission (13) et, côté réception, à un mélangeur (15) qui est relié à une antenne de réception (14) d'un fréquencemètre (17) et qui est chargé par un signal d'oscillateur (S_{O}).

8. Sonde radar selon la revendication 7, **caractérisée en ce que** l'émetteur (9) et le modulateur (12) sont agencés de manière à produire un signal d'émission (S_{S}) modulé en fréquence avec une forme au moins approximativement triangulaire ou en dents de scie.

9. Sonde radar selon l'une des revendications 7 et 8, **caractérisée en ce que** le fréquencemètre (17) comprend un filtre passe-bande actif ou un filtre numérique actif et/ou que les antennes (13,14) sont des antennes "phased-array", disposées sur une plaquette à circuits imprimés (20).

10. Utilisation d'une sonde radar selon l'une des revendications 7 à 9 dans une cuvette sanitaire en céramique transparente pour le rayonnement radar, **caractérisée en ce que** les antennes (13,14;18,19) de la sonde radar (3) sont orientées par rapport à une paroi de la cuvette sanitaire céramique (4) de telle sorte que la direction du rayonnement radar dans le matériau céramique fait un angle inférieur à 18° par rapport à la normale à la surface du mur.
